(19) Europäisches Patentamt
European Patent Office
Office européen des brevets

(11) **EP 2 610 758 A1**

# (12) EUROPEAN PATENT APPLICATION
published in accordance with Art. 153(4) EPC

(43) Date of publication:
**03.07.2013 Bulletin 2013/27**

(21) Application number: **10856371.9**

(22) Date of filing: **25.08.2010**

(51) Int Cl.:
*G06F 15/17* (2006.01)    *G06F 11/30* (2006.01)
*G06F 11/34* (2006.01)

(86) International application number:
**PCT/JP2010/005232**

(87) International publication number:
**WO 2012/025959 (01.03.2012 Gazette 2012/09)**

(84) Designated Contracting States:
**AL AT BE BG CH CY CZ DE DK EE ES FI FR GB GR HR HU IE IS IT LI LT LU LV MC MK MT NL NO PL PT RO SE SI SK SM TR**

(71) Applicant: **Fujitsu Limited**
**Kawasaki-shi, Kanagawa 211-8588 (JP)**

(72) Inventor: **MIYOSHI, Ikuo**
**Kawasaki-shi**
**Kanagawa 211-8588 (JP)**

(74) Representative: **Ward, James Norman**
**Haseltine Lake LLP**
**Lincoln House, 5th Floor**
**300 High Holborn**
**London WC1V 7JH (GB)**

(54) **NETWORK EVALUATION DEVICE, METHOD OF EVALUATING NETWORK AND NETWORK EVALUATION PROGRAM**

(57)     A network evaluation device evaluates a communication state of an information processing apparatus including a plurality of processors which communicate with one another and which execute a program. The network evaluation device includes: a memory configured to store a network evaluation program; and a processor configured to execute a process based on the network evaluation program in the memory. The process includes: obtaining first communication processing time between the plurality of processors while the plurality of processors are not executing the program; recording the first communication processing time; obtaining second communication processing time between the plurality of processors while the plurality of processors are executing the program; comparing the first communication processing time with the second communication processing time; and outputting a time difference between the first communication processing time and the second communication processing time.

FIG. 1

**Description**

FIELD

The technology disclosed herein relates to a network evaluation device that evaluates a communication state between a plurality of processors in an information processing apparatus, the plurality of processors performing communication with one other and each executing a program, a method for evaluating a network, and a recording medium on which a network evaluation program is recorded.

BACKGROUND

Currently, an information processing apparatus is known in which a plurality of processors as arithmetic processing devices perform communication with one other and each execute a program to execute a desired calculation process. When the program is to be executed by the plurality of processors, a process for exchanging, through communication processing, data to execute the desired calculation process is performed between the plurality of processors. Data communication processing performed between the plurality of processors takes a certain period of time. Processing time for communication between the plurality of processors is called communication overhead.

In order to increase the speed of the desired calculation process, it is desirable to suppress the communication overhead as much as possible. However, the communication overhead is affected not only by minimum processing time that is taken to exchange data between the plurality of processors but also by the degree of congestion of a communication network and the communication beginning timing of each processor. Therefore, it is difficult to grasp how much the communication overhead can be suppressed.

On the other hand, in order to suppress the degree of congestion of the communication network or change the communication beginning time of each processor, a change in the algorithm of the calculation process may be desired. When the algorithm of the calculation process is changed, the setting of a system may be desired to be changed again, and therefore a workload may increase with an increase in the speed of the calculation process. Therefore, it is desirable to efficiently estimate the effect and the limit of an increase in the speed of the calculation process realized by a change to the algorithm.

However, the degree of an increase in the speed of the calculation process obtained by suppressing the communication overhead and changing the algorithm largely depends on the experience and the skill of an operator. Therefore, even if the algorithm is simply changed, it is difficult to grasp the effect and the limit of an increase in the speed of the calculation process realized by the change in the algorithm. In addition, when the number of processors used is increased to perform a large-scale calculation process, it is also difficult to grasp the limit of an increase in the speed of the calculation process.

The following documents are known as examples of the related art.

[CITATION LIST]

[PATENT LITERATURE]

[PATENT LITERATURE] Japanese Laid-open Patent Publication No. 10-98468
[PATENT LITERATURE 2] Japanese Laid-open Patent Publication No. 05-250339
[PATENT LITERATURE 3] Japanese Laid-open Patent Publication No. 2004-13567

SUMMARY

[TECHNICAL PROBLEM]

An object of the technology disclosed herein is to provide a network evaluation device that may easily evaluate communication overhead between a plurality of processors, a method for evaluating a network, and a recording medium on which a network evaluation program is recorded.

[SOLUTION TO PROBLEM]

A first aspect of the technology disclosed herein provides a network evaluation device that evaluates a communication state of an information processing apparatus including a plurality of processors which communicate with one another and which execute a program. The network evaluation device includes a first communication processing time obtaining unit that obtains first communication processing time between the plurality of processors while the plurality of processors are not executing the program, a first communication processing time recording unit that records the first communication processing time obtained by the first communication processing time obtaining unit, a second communication processing time obtaining unit that obtains second communication processing time between the plurality of processors while the plurality of processors are executing the program, and a communication processing time comparison unit that compares the first communication processing time recorded by the first communication processing time recording unit with the second communication processing time obtained by the second communication processing time obtaining unit, and that outputs a time difference between the first communication processing time and the second communication processing time.

A second aspect of the technology disclosed herein provides a method for evaluating a network that evaluates a communication state of an information processing apparatus including a plurality of processors which communicate with one another and which execute a program. The method for evaluating a network includes obtaining first communication processing time between the plurality of processors while the plurality of processors are not executing the program, recording the obtained first communication processing time, obtaining second communication processing time between the plurality of processors while the plurality of processors are executing the program, comparing the recorded first communication processing time with the obtained second communication processing time, and outputting a time difference between the first communication processing time and the second communication processing time.

A third aspect of the technology disclosed herein provides a computer-readable recording medium having stored therein a network evaluation program for causing a computer to execute a process for evaluating a communication state of an information processing apparatus including a plurality of processors that communicate with one another and that execute a program. The process includes obtaining first communication processing time between the plurality of processors while the plurality of processors are not executing the program, recording the obtained first communication processing time, obtaining second communication processing time between the plurality of processors while the plurality of processors are executing the program, comparing the recorded first communication processing time with the obtained second communication processing time, and outputting a time difference between the first communication processing time and the second communication processing time.

[ADVANTAGEOUS EFFECTS OF INVENTION]

According to the technology disclosed herein, a first communication processing time obtaining unit obtains first communication processing time between a plurality of processors while the plurality of processors are not executing a program. Subsequently, a second communication processing time obtaining unit obtains second communication processing time between the plurality of processors while the plurality of processors are executing the program. By comparing the first communication processing time and the second communication processing time and outputting a time difference between the first communication processing time and the second communication processing time using a communication processing time comparison unit, communication overhead between the plurality of processors may be easily evaluated. According to the technology disclosed herein, since the communication overhead between the plurality of processors may be easily evaluated, the limit of an increase in the speed of processing of a program when the number of processors used is increased may be easily grasped.

BRIEF DESCRIPTION OF DRAWINGS

FIG. 1 is a diagram illustrating an outline of an information processing apparatus including a network evaluation device according to an embodiment;

FIG. 2 is a diagram illustrating a flowchart illustrating a process performed by the network evaluation device according to the embodiment;

FIG. 3 is a diagram illustrating a flowchart illustrating a process performed by the network evaluation device according to the embodiment;

FIG. 4 is a diagram illustrating a flowchart illustrating a process performed by the network evaluation device according to the embodiment;

FIG. 5 is a diagram illustrating a flowchart illustrating a process performed by the network evaluation device according to the embodiment;

FIG. 6 is a diagram illustrating a flowchart illustrating a process performed by the network evaluation device according to the embodiment;

FIG. 7 is a diagram illustrating an example of an ideal communication processing time recording table according to the embodiment;

FIG. 8 illustrates an example of a method for calculating ideal communication processing time and communication processing time according to the embodiment;

FIG. 9 is a diagram illustrating communication processing times and ideal communication processing times obtained by the network evaluation device according to the embodiment;

FIG. 10 is a diagram illustrating a relationship between the number of arithmetic devices (the number of nodes) involved in communication and time taken to perform communication processing in a communication processing software library according to an MPI standard in the network evaluation device according to the embodiment;

FIG. 11 is a diagram illustrating a relationship between a communication data length and the time taken to perform the communication processing in the communication processing software library according to the MPI standard in the network evaluation device according to the embodiment; and

FIG. 12 is a schematic diagram illustrating an approach to calculating a reduction target value of communication overhead in the network evaluation device according to the embodiment.

DESCRIPTION OF EMBODIMENTS

A network evaluation device 100, a method for evaluating a network, a network evaluation program, and a recording medium on which the network evaluation program is recorded according to an embodiment of the technology disclosed herein are described hereinafter. However, the technology disclosed herein is not limited to each embodiment.

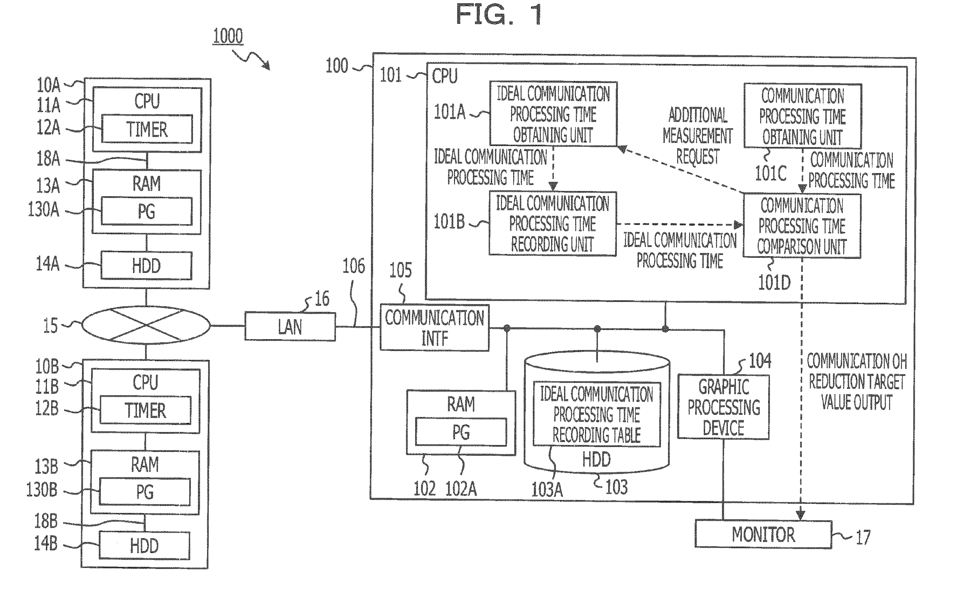

In FIGs. 1 to 12, the network evaluation device 100, the method for evaluating a network, and the network evaluation program according to the embodiment are described.

FIG. 1 is a diagram illustrating the schematic configuration of the network evaluation device 100 included in an information processing apparatus 1000 according to the embodiment.

The information processing apparatus 1000 includes an arithmetic device 10A, an arithmetic device 10B, a network 15, a local area network (LAN) 16, a monitor 17, and the network evaluation device 100. The arithmetic device 10A, the arithmetic device 10B, the monitor 17, and the network evaluation device 100 are coupled to one another through the network 15. The arithmetic device 10A and the arithmetic device 10B have the same configuration conditions.

The arithmetic device 10A includes a central processing unit (CPU) 11A, a timer 12A, a random access memory (RAM) 13A, a hard disk drive (HDD) 14A, and a bus 18A.

The entirety of the arithmetic device 10A is controlled by the CPU 11A. The RAM 13A and the HDD 14A are coupled to the CPU 11A through the bus 18A.

The CPU 11A has a function of the timer 12A. The timer 12A measures, for example, system time of the arithmetic device 10A. When communication processing is performed between the CPU 11A of the arithmetic device 10A and a CPU 11B of the arithmetic device 10B, the timer 12A measures a communication processing beginning time and a communication processing end time.

The CPU 11A calculates a difference between the communication processing beginning time and the communication processing end time while the CPU 11A of the arithmetic device 10A and the CPU 11B of the arithmetic device 10B are not performing a calculation process. Before obtaining the communication processing beginning time, the CPU 11A temporarily stores a part of a calculation program 130A stored in the RAM 13A in a cache, which is not illustrated, included in the CPU 11A. The timer 12A of the CPU 11A obtains a time at which a process for transmitting the part of the calculation program 130A to the CPU 11B of the arithmetic device 10B begins. For example, the timer 12A of the CPU 11A obtains, as the communication processing end time, a time at which the part of the calculation program 130A is stored in the cache of the CPU 11A after the part of the calculation program 130A is temporarily stored in a cache, which is not illustrated, included in the terminal apparatus 11B and then retransmitted to the CPU 11A of the arithmetic device 10A. The difference between the communication processing beginning time and the communication processing end time when the calculation process is not being performed is referred to as ideal communication processing time between the CPU 11A and the CPU 11B. The CPU 11A transmits the ideal communication processing time of the arithmetic device 10A to an ideal communication processing time obtaining unit 101A in the network evaluation device 100. The CPU 11A transmits, for example, the ideal communication processing time for one operation of communication between the CPU 11A and the CPU 11B to the ideal communication processing time obtaining unit 101A.

In addition, the CPU 11A calculates the difference between the communication processing beginning time and the communication processing end time while the CPU 11A of the arithmetic device 10A and the CPU 11B of the arithmetic device 10B are performing the calculation process. The difference between the communication processing beginning time and the communication processing end time when the calculation process is being performed is referred to as communication processing time between the CPU 11A and the CPU 11B. The CPU 11A transmits the communication processing time between the CPU 11A and the CPU 11B to a communication processing time obtaining unit 101C in the network evaluation device 100. For example, the CPU 11A transmits the communication processing time for one operation of communication between the CPU 11A and the CPU 11B to the communication processing time obtaining unit 101C.

The RAM 13A temporarily stores, for example, at least a part of a program of an operating system (OS) to be executed by the CPU 11A, an application program, and the calculation program 130A. The calculation program 130A is a program for executing the calculation process according to the embodiment. The calculation program 130A is executed by the CPU 11A and the CPU 11B of the arithmetic device 10B, which is described later. In addition, the RAM 13A temporarily stores the communication processing beginning time and the communication processing end time measured by the timer 12A. The RAM 13A temporarily stores the ideal communication processing time and the communication processing time between the CPU 11A and the CPU 11B measured by the CPU 11A. In addition, the RAM 13A stores various pieces of data to be used for processing in the CPU 11A.

The calculation program 130A may be stored in a storage medium other than the RAM 13A. The calculation program 130A is recorded, for example, on a "portable physical storage medium" such as a flexible disk (FD), a CD-ROM, an MO disk, a DVD disc, a magneto-optical disk, or an IC card inserted into the arithmetic device 10A. The calculation program 130A is stored in a disk device provided inside or outside the arithmetic device 10A or a storage medium held by "another computer (or a server)" coupled to the arithmetic device 10A through a public line, the Internet, a LAN, a WAN, or the like. The arithmetic device 10A may execute the calculation process by reading the calculation program 130A from the recording medium.

The HDD 14A stores, for example, the OS and the application program. In addition, the HDD 14A stores the communication processing beginning time and the communication processing end time measured by the timer 12A. The HDD 14A stores the ideal communication processing time and the communication processing time between the CPU 11A and the CPU 11B measured by the CPU 11A.

The arithmetic device 10B includes the CPU 11B, a timer 12B, a RAM 13B, a HDD 14B, and a bus 18B.

As with the arithmetic device 10A, the entirety of the arithmetic device 10B is controlled by the CPU 11B. The RAM 13B and the HDD 14B are coupled to the CPU 11B through the bus 18B.

The CPU 11B has a function of the timer 12B. As with the timer 12A, the timer 12B measures, for example, system time of the arithmetic device 10B. When the communication processing is performed between the CPU 11B of the arithmetic device 10B and the CPU 11A of the arithmetic device 10A, the timer 12B measures the communication processing beginning time and the communication processing end time.

The CPU 11B calculates a difference between the communication processing beginning time and the communication processing end time while the CPU 11A of the arithmetic device 10A and the CPU 11B of the arithmetic device 10B are not performing the calculation process. Before obtaining the communication processing beginning time, the CPU 11B temporarily stores a part of a calculation program 130B stored in the RAM 13B in the cache, which is not illustrated, included in the CPU 11B. The timer 12B of the CPU 11B obtains, as the communication processing beginning time, a time at which a process for transmitting the part of the calculation program 130B to the CPU 11A of the arithmetic device 10A begins. For example, the timer 12B of the CPU 11B obtains, as the communication processing end time, a time at which the part of the calculation program 130B is stored in the cache of the CPU 11B after the part of the calculation program 130B is temporarily stored in the cache, which is not illustrated, of the terminal apparatus 11A and then retransmitted to the CPU 11B of the arithmetic device 10B. The difference between the communication processing beginning time and the communication processing end time when the calculation process is not being performed is referred to as ideal communication processing time between the CPU 11A and the CPU 11B. The CPU 11B transmits the ideal communication processing time between the CPU 11A and the CPU 11B to the ideal communication processing time obtaining unit 101A in the network evaluation device 100. The CPU 11B transmits, for example, the ideal communication processing time for one operation of communication between the CPU 11A and the CPU 11B to the ideal communication processing time obtaining unit 101A.

In addition, the CPU 11B calculates the difference between the communication processing beginning time and the communication processing end time while the CPU 11A of the arithmetic device 10A and the CPU 11B of the arithmetic device 10B are performing the calculation process. The difference between the communication processing beginning time and the communication processing end time when the calculation process is being performed is referred to as communication processing time between the CPU 11A and the CPU 11B. The CPU 11B transmits the communication processing time between the CPU 11A and the CPU 11B calculated by the CPU 11B to the communication processing time obtaining unit 101C in the network evaluation device 100. For example, the CPU 11B transmits the communication processing time for one operation of communication between the CPU 11A and the CPU 11B to the communication processing time obtaining unit 101C.

As with the RAM 13A, the RAM 13B temporarily stores, for example, at least a part of a program of an OS to be executed by the CPU 11B, an application program, and the calculation program 130B. The calculation program 130B is a program for executing the calculation process according to the embodiment. The calculation program 130B is executed by the CPU 11A and the CPU 11B. In addition, the RAM 13B temporarily stores the communication processing beginning time and the communication processing end time measured by the timer 12B. The RAM 13B temporarily stores the ideal communication processing time and the communication processing time between the CPU 11A and the CPU 11B measured by the timer 12B. The RAM 13B stores various pieces of data to be used for processing in the CPU 11B. As with the calculation program 130A, the calculation program 130B may be stored in a storage medium other than the RAM 13B.

As with the HDD 14A, the HDD 14B stores, for example, the OS and the application program. In addition, the HDD 14B stores the communication processing beginning time and the communication processing end time measured by the timer 12B. The HDD 14B stores the ideal communication processing time and the communication processing time between the CPU 11A and the CPU 11B measured by the CPU 11B.

The network evaluation device 100 includes a CPU 101, a RAM 102, a HDD 103, a graphic processing device 104, a communication interface 105, and a bus 106.

The entirety of the network evaluation device 100 is controlled by the CPU 101. The RAM 102, the HDD 103, the graphic processing device 104, and the communication interface 105 are coupled to the CPU 101 through the bus 106.

The CPU 101 includes the ideal communication processing time obtaining unit 101A, an ideal communication processing time recording unit 101B, the communication processing time obtaining unit 101C, and a communication processing time comparison unit 101D.

The ideal communication processing time obtaining unit 101A receives the ideal communication processing time between the CPU 11A and the CPU 11B transmitted from the CPU 11A of the arithmetic device 10A and the ideal communication processing time between the CPU 11A and the CPU 11B transmitted from the CPU 11B of the arithmetic device 10B. The ideal communication processing time obtaining unit 101A extracts a maximum value of the ideal communication processing time from the ideal communication processing times between the CPU 11A and the CPU 11B received from the arithmetic device 10A and the arithmetic device 10B.

The ideal communication processing time recording unit 101B records the maximum ideal communication processing time obtained by the ideal communication processing time obtaining unit 101A as a benchmark. The recorded maximum ideal communication processing time is referred to when compared with communication overhead, which is described later.

The communication processing time obtaining unit 101C receives the communication processing time between the CPU 11A and the CPU 11B transmitted from the CPU 11A of the arithmetic device 10A and the communication processing time between the CPU 11A and the CPU 11B transmitted from the CPU 11B of the arithmetic device 10B. The communication processing time obtaining unit 101C extracts a maximum value of the communication processing time from the communication processing times between the CPU 11A and the CPU 11B received from the arithmetic device 10A and the arithmetic device 10B. Note that a certain period of time is taken to perform the communication processing on data between a plurality of CPUs, namely the CPU 11A and the CPU 11B. Communication processing time between the plurality of CPUs generated while the CPU 11A and the CPU 11B are performing the calculation process is referred to as communication overhead.

The communication processing time comparison unit 101D compares the ideal communication processing time recorded in the ideal communication processing time recording unit 101B with the communication overhead obtained by the communication processing time obtaining unit 101C. Through the comparison, the communication processing time comparison unit 101D determines whether or not a communication processing pattern corresponding to the ideal communication processing time is the same as or similar to a communication processing pattern corresponding to the communication overhead. If the communication processing pattern corresponding to the ideal communication processing time is the same as or similar to the communication processing pattern corresponding to the communication overhead, the communication processing time comparison unit 101D outputs the ideal communication processing time corresponding to the same or similar communication processing pattern as a reduction target value of the communication overhead. If the communication processing pattern corresponding to the ideal communication processing time is not the same as or similar to the communication processing pattern corresponding to the communication overhead, the communication processing time comparison unit 101D requests the ideal communication processing time obtaining unit 101A to perform additional measurement of the ideal communication processing time.

More specifically, the communication processing time comparison unit 101D compares the communication processing time between the CPU 11A and the CPU 11B obtained by the communication processing time obtaining unit 101C with the ideal communication processing time obtained by the ideal communication processing time obtaining unit 101A. As a result of the comparison of the communication processing time with the ideal communication processing time, the communication processing time comparison unit 101D detects data having a significant difference. The communication processing time comparison unit 101D calculates, in the data having a significant difference, a time difference between the communication processing time and the ideal communication processing time as the reduction target value of the communication overhead. The communication processing time comparison unit 101D outputs the calculated reduction target value of the communication overhead to the monitor 17. The reduction target value of the communication overhead is a target value used as a benchmark when reducing the communication overhead by changing an arithmetic algorithm.

The RAM 102 temporarily stores, for example, at least a part of a program of an OS to be executed by the CPU 101, an application program, and an evaluation program 102A. The evaluation program 102A is a program for obtaining and comparing the ideal communication processing time and the communication processing time between the CPU 11A and the CPU 11B. The evaluation program 102A is executed by the CPU 101. The RAM 102 temporarily stores the ideal communication processing time and the communication processing time between the CPU 11A and the CPU 11B measured by the CPU 11A. The RAM 102 temporarily stores the ideal communication processing time and the communication processing time between the CPU 11A and the CPU 11B measured by the CPU 11B. In addition, the RAM 102 stores various pieces of data to be used for processing in the CPU 101.

The evaluation program 102A may be stored in a storage medium other than the RAM 102. The evaluation program 102A is recorded, for example, on a "portable physical storage medium" such as a flexible disk (FD), a CD-ROM, an MO disk, a DVD disc, a magneto-optical disk, or an IC card inserted into the network evaluation device 100. The evaluation program 102A is stored in a disk device provided inside or outside the network evaluation device 100 or a storage medium held by "another computer (or a server)" coupled to the network evaluation device 100 through a public line, the Internet, a LAN, a WAN, or the like. The arithmetic device 10A may execute the calculation process by reading the evaluation program 102A from the recording medium.

The HDD 103 stores, for example, the OS and the application program. The HDD 103 stores an ideal communication processing time recording table 103A, which is described later. The ideal communication processing time recording table 103A is described later. The HDD 103 temporarily stores the ideal communication processing time and the communication processing time between the CPU 11A and the CPU 11B measured by the CPU 11A. The HDD 103 temporarily stores the ideal communication processing time and the communication processing time between the CPU 11A and the CPU 11B measured by the CPU 11B. In addition, the HDD 103 stores the communication processing pattern corresponding to the ideal communication processing time measured in advance using the ideal communication processing time obtaining unit 101A and the communication processing time comparison unit 101D. The communication processing pattern is a pattern of the communication processing corresponding to the ideal communication processing time used for calculating the reduction target value of the communication overhead.

The monitor 17 is coupled to the graphic processing device 104. The graphic processing device 104 outputs, to the monitor 17, the reduction target value of the communication overhead obtained by the communication processing time comparison unit 101D in accordance with an instruction from the CPU 101.

The communication interface 105 is coupled to the LAN 16. The communication interface 105 transmits and receives data to and from the arithmetic device 10A and the arithmetic device 10B through the LAN 16 and the network 15. In addition, the communication interface 105 receives the ideal communication processing time and the communication processing time between the CPU 11A and the CPU 11B from the arithmetic device 10A and the arithmetic device 10B.

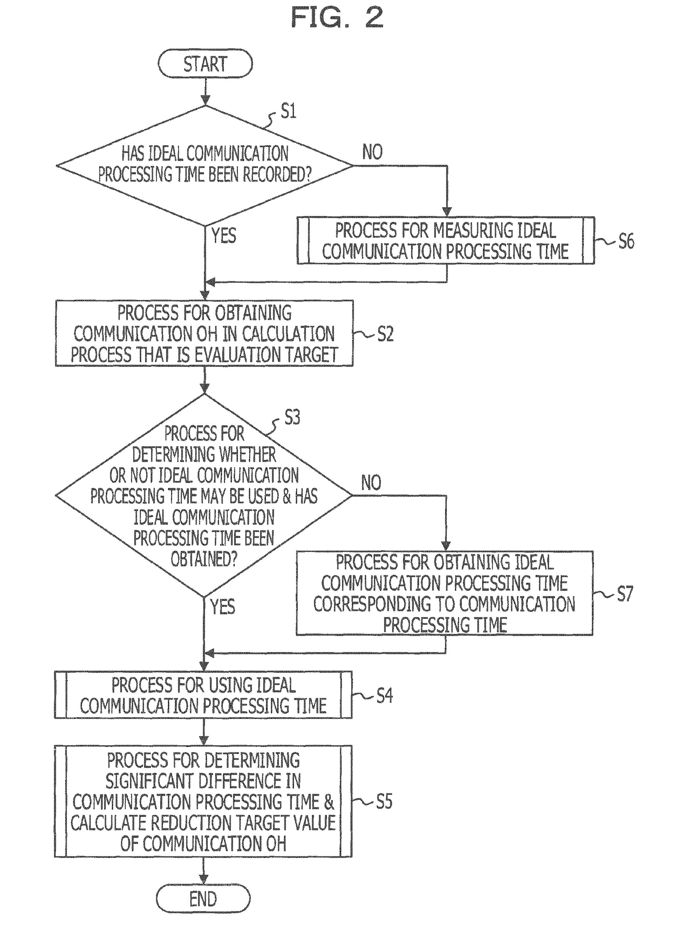

FIG. 2 is a diagram illustrating a flowchart illustrating a process performed by the network evaluation device 100 according to the embodiment. The process illustrated in FIG. 2 is a process for estimating the reduction target value of the communication overhead using the network evaluation device 100 according to the embodiment.

As illustrated in FIG. 2, in S1, the ideal communication processing time obtaining unit 101A determines whether or not the ideal communication processing times between the CPU 11A and the CPU 11B received from the arithmetic device 10A and the arithmetic device 10B are recorded in the ideal communication processing time recording unit 101B. In addition, in S1, the ideal communication processing time obtaining unit 101A determines whether or not the network evaluation device 100 is in an initial state, in which the network evaluation device 100 is used for the first time. If the ideal communication processing time obtaining unit 101A determines in S1 that the ideal communication processing times between the CPU 11A and the CPU 11B are recorded or that the network evaluation device 100 is not in the initial state, in which the network evaluation device 100 is used for the first time, processing in S2 is then performed. Note that, in the embodiment, the processing in S1 may be omitted. The processing in S2 may be begun without performing the processing in S1.

If it is determined in S1 that the ideal communication processing times are not recorded in the ideal communication processing time recording unit 101B or that the network evaluation device 100 is in the initial state, in which the network evaluation device 100 is used for the first time, the ideal communication processing time obtaining unit 101A performs a process for measuring the ideal communication processing time in S6. The process for measuring the ideal communication processing time performed by the ideal communication processing time obtaining unit 101A is described later.

In S2, the communication processing time obtaining unit 101C performs a process for obtaining the communication overhead in the calculation process that is an evaluation target of the communication overhead.

In S2, the CPU 11A and the CPU 11B perform the calculation process by executing the calculation program 130A recorded in the arithmetic device 10A or the calculation program 130B recorded in the arithmetic device 10B. The communication processing time obtaining unit 101C obtains the communication processing times between the CPU 11A and the CPU 11B while the arithmetic device 10A and the arithmetic device 10B are performing the calculation process from the arithmetic device 10A and the arithmetic device 10B, respectively. Note that a certain period of time is taken to perform the communication processing on the data between a plurality of CPUs, namely the CPU 11A and the CPU 11B. The communication processing times between the plurality of CPUs corresponding to the calculation process performed by the CPU 11A and the CPU 11B are simply referred to as communication overhead (communication OH) in FIG. 2.

In S3, the communication processing time comparison unit 101D performs a process for determining whether or not the ideal communication processing time for the communication processing pattern corresponding to the communication overhead may be used as the reduction target value of the communication overhead. The calculation program 130A is executed by the CPU 11A and the CPU 11B. A process for determining usability performed by the communication processing time comparison unit 101D is described later.

In addition, in S3, the communication processing time comparison unit 101D determines whether or not the ideal communication processing time for the communication processing pattern corresponding to the communication overhead has been obtained. If the communication processing time comparison unit 101D determines in S3 that the ideal communication processing time for the communication processing pattern corresponding to the communication overhead has been obtained, processing in S4 is then performed.

If it is determined in S3 that the ideal communication processing time for the communication processing pattern corresponding to the communication overhead has not been obtained, the communication processing time comparison unit 101D requests the ideal communication processing time obtaining unit 101A to obtain the ideal communication processing time corresponding to the communication processing time in S7.

In S4, the communication processing time comparison unit 101D performs a process for using the ideal communication processing time as the reduction target value of the communication overhead. The process for using the ideal communication processing time performed by the communication processing time comparison unit 101D is described later.

In S5, the communication processing time comparison unit 101D performs a process for determining a significant difference in the ideal communication processing time and the communication overhead. The process for determining the significant difference in the communication processing pattern performed by the communication processing time comparison unit 101D is described later.

In addition, in S5, the communication processing time comparison unit 101D extracts data having a significant difference by using the ideal communication processing time. Next, the communication processing time comparison unit 101D calculates, in the data having a significant difference, a time difference between the communication processing time and the ideal communication processing time as the reduction target value of the communication overhead, and outputs the reduction target value of the communication overhead to the monitor 17. In addition, the communication processing time comparison unit 101D records the reduction target value of the communication overhead on the HDD 103.

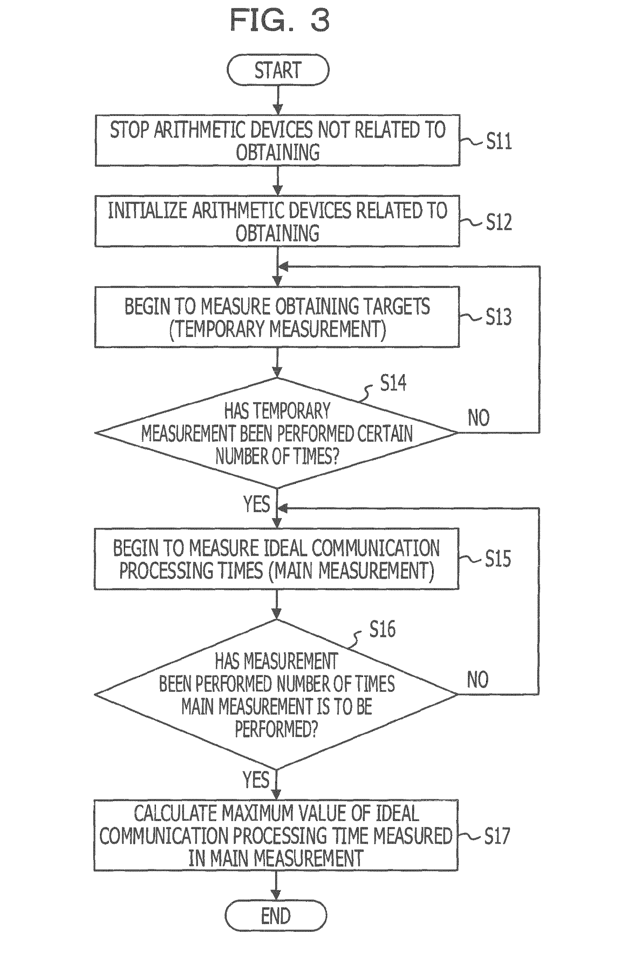

FIG. 3 is a diagram illustrating a flowchart illustrating a process performed by the network evaluation device 100 according to the embodiment. The flowchart illustrated in FIG. 3 illustrates the process for measuring the ideal communication processing time performed by the ideal communication processing time obtaining unit 101A in S6 illustrated in FIG. 2. The embodiment illustrates an example in which the ideal communication processing time between the CPU 11A and the CPU 11B, for which the communication overhead is to be evaluated, is measured.

As illustrated in FIG. 3, in S11, the ideal communication processing time obtaining unit 101A performs a process for stopping the CPU 11A and the CPU 11B that are not related to the obtaining of the communication processing times of the CPU 11A and the CPU 11B. CPUs other than the CPU 11A and the CPU 11B are omitted in the drawings for the sake of simplification. The process for stopping the CPU 11A and the CPU 11B that are not related to the obtaining of the communication processing times is performed in order to suppress disturbance caused by the CPU 11A and the CPU 11B that are not related to the obtaining of the communication processing times in the obtaining of the communication processing times. Note that, in the embodiment, the processing in S11 may be omitted depending on the operation conditions of the information processing apparatus 1000. Processing in S12 may be begun without performing the processing in S11.

In S12, the ideal communication processing time obtaining unit 101A initializes CPUs related to the obtaining of the communication processing times. That is, the ideal communication processing time obtaining unit 101A initializes the CPU 11A and the CPU 11B.

In S13, the ideal communication processing time obtaining unit 101A begins to measure the communication processing times between the CPU 11A and the CPU 11B, for which the communication processing times are to be obtained. The ideal communication processing time obtaining unit 101A causes the CPU 11A and the CPU 11B to measure the communication processing times between the CPU 11A and the CPU 11B, respectively. The ideal communication processing time obtaining unit 101A causes the CPU 11A and the CPU 11B to measure the communication processing times between the CPU 11A and the CPU 11B five or ten times as temporary measurement. The temporary measurement is performed in order to suppress variation in the measured values of the communication processing times between the CPU 11A and the CPU 11B after the temporary measurement.

In S14, the ideal communication processing time obtaining unit 101A determines whether or not the temporary measurement between the CPU 11A and the CPU 11B has been performed a certain number of times. If the ideal communication processing time obtaining unit 101A determines in S14 that the measurement of the communication processing times between the CPU 11A and the CPU 11B has been performed the certain number of times, processing in S15 is then performed.

If it is determined in S14 that the communication processing as the temporary measurement between the CPU 11A and the CPU 11B has not been performed the certain number of times, the ideal communication process time obtaining unit 101A then performs the processing in S13.

In S15, the ideal communication process time obtaining unit 101A begins to measure the ideal communication processing times between the CPU 11A and the CPU 11B. More specifically, the ideal communication processing time obtaining unit 101A causes the CPU 11A and the CPU 11B to measure the ideal communication processing times at a time when the communication processing between the CPU 11A and the CPU 11B has been performed the certain number of times, namely, for example, five or ten times. The measurement of the ideal communication processing times between the CPU 11A and the CPU 11B in S15 after the temporary measurement is referred to as main measurement.

In S16, the ideal communication processing time obtaining unit 101A determines whether or not the measurement of the ideal communication processing times between the CPU 11A and the CPU 11B has been repeatedly performed a certain number of times, that is, the number of times the main measurement is to be performed. If it is determined in S16 that the measurement between the CPU 11A and the CPU 11B has been performed the certain number of times, the ideal communication processing time obtaining unit 101A then performs processing in S17.

If it is determined in S16 that the communication processing between the CPU 11A and the CPU 11B has not been performed the number of times the main measurement is to be performed, the ideal communication processing time obtaining unit 101A then performs the processing in S15.

In S17, the ideal communication processing time obtaining unit 101A obtains a maximum value from the ideal communication processing times measured in the main measurement performed by the CPU 11A and the CPU 11B, the ideal communication processing times being recorded on the HDD 103. The maximum value of the ideal communication processing times between the CPU 11A and the CPU 11B calculated by the ideal communication processing time obtaining unit 101A is recorded in the ideal communication processing time recording unit 101B.

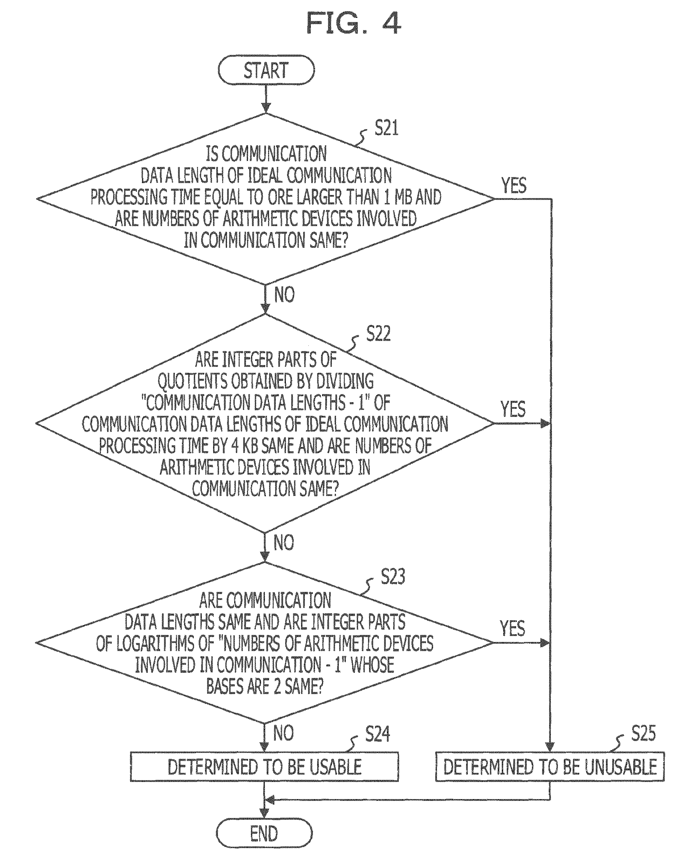

FIG. 4 is a diagram illustrating a flowchart illustrating a process performed by the network evaluation device 100 according to the embodiment. The flowchart illustrated in FIG. 4 illustrates the process for determining usability performed by the communication processing time comparison unit 101D in S3 illustrated in FIG. 2. The process for determining usability is a process for determining whether or not the ideal communication processing time is used as the reduction target value of the communication overhead.

In S21, the communication processing time comparison unit 101D determines whether or not the communication data length of the communication processing pattern between the CPU 11A and the CPU 11B is equal to or larger than 1 MB. Similarly, the communication processing time comparison unit 101D determines whether or not the number of arithmetic devices involved in the communication of the ideal communication processing time corresponding to the communication processing pattern between the CPU 11A and the CPU 11B and the number of arithmetic devices involved in the communication of the communication processing time are the same. If the communication data length of the communication processing pattern between the CPU 11A and the CPU 11B is smaller than 1 MB or if the numbers of arithmetic devices involved in the communication are different, the communication processing time comparison unit 101D then makes a determination in S22. The determination as to the communication data length of the communication processing pattern is made in order to determine data reliability at a time when the ideal communication processing time is used as the reduction target value of the communication overhead.

If the communication data length of the communication processing pattern is equal to or larger than 1 MB and the numbers of arithmetic devices involved in the communication are the same in S21, the communication process time comparison unit 101D then makes a determination in S25.

In S25, the communication processing time comparison unit 101D determines that the ideal communication processing time corresponding to the communication processing pattern between the CPU 11A and the CPU 11B may be used as the reduction target value of the communication overhead.

In S22, the communication processing time comparison unit 101D determines whether or not the integer part of a quotient obtained by dividing "communication data length - 1" of the communication data length of the communication processing pattern between the CPU 11A and the CPU 11B by 4 KB is the same as the value of the integer part of the ideal communication processing time. Herein, 4 KB is 4,096 B. Similarly, the communication processing time comparison unit 101D determines whether or not the number of arithmetic devices involved in the communication of the communication processing pattern between the CPU 11A and the CPU 11B is the same as the value of the integer part of the ideal communication processing time. A packet length of 4 KB is set as an example of the packet length used for the communication. By dividing "communication data length - 1" by 4 KB, the communication data length of the communication processing pattern between the CPU 11A and the CPU 11B may be determined from the number of packets. If the integer part of the above-mentioned quotient is the same as the value of the integer part of the ideal communication processing time, that is, if the numbers of packets are the same, the communication processing time and the ideal communication processing time between the CPU 11A and the CPU 11B are assumed to be not significantly different from each other. In S22, if the integer part of the quotient of "communication data length - 1" of the communication processing pattern between the CPU 11A and the CPU 11B is different or if the numbers of arithmetic devices involved in the communication are different, the communication processing time comparison unit 101D then makes a determination in S23. By determining whether or not the integer part of the above-mentioned quotient is the same as the value of the integer part of the ideal communication processing time, the data reliability when the ideal communication processing time is used as the reduction target value of the communication overhead may be determined.

If the integer part of the quotient of the communication data length corresponding to the communication processing pattern between the CPU 11A and the CPU 11B is the same and the numbers of arithmetic devices involved in the communication are the same in S22, the communication processing time comparison unit 101D then makes the determination in S25.

In S23, the communication processing time comparison unit 101D determines whether or not the communication data lengths of the communication processing pattern between the CPU 11A and the CPU 11B are the same. Similarly, the communication processing time comparison unit 101D determines whether or not the integer parts of logarithms of "the numbers of arithmetic devices involved in the communication - 1" of the communication processing pattern between the CPU 11A and the CPU 11B whose bases are 2 are the same. If the communication data lengths of the communication processing pattern between the CPU 11A and the CPU 11B and the integer parts of the logarithms of the numbers of arithmetic devices involved in the communication are different, the communication processing time comparison unit 101D then makes a determination in S24. By determining whether or not the communication data lengths of the communication processing pattern between the CPU 11A and the CPU 11B are the same and whether or not the integer parts of the logarithms of "the numbers of arithmetic devices involved in the communication - 1" are the same, the data reliability when the ideal communication processing time is used as the reduction target value of the communication overhead may be determined.

If the communication data lengths corresponding to the communication processing pattern between the CPU 11A and the CPU 11B are the same or if the integer parts of the logarithms of the numbers of arithmetic devices involved in the communication are the same in S23, the communication processing time comparison unit 101D then makes the determination in S25.

In S24, the communication processing time comparison unit 101D determines that it is not possible to use the ideal communication processing time corresponding to the communication processing pattern as the reduction target value of the communication overhead.

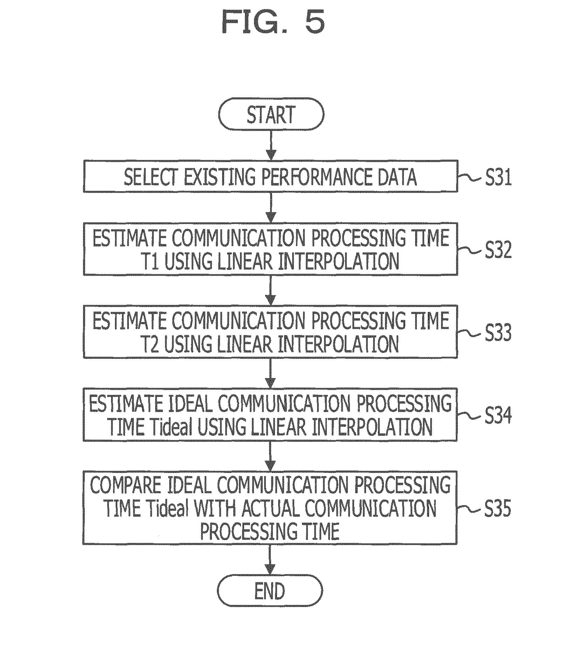

FIG. 5 is a diagram illustrating a flowchart illustrating a process performed by the network evaluation device 100 according to the embodiment. The flowchart illustrated in FIG. 5 illustrates the process for using the ideal communication processing time performed by the communication processing time comparison unit 101D in S4 illustrated in FIG. 2. The process for using the ideal communication processing time is a process for using the ideal communication processing time as the reduction target value of the communication overhead.

In S31, the communication processing time comparison unit 101D selects, for example, four pieces of existing performance data whose communication data lengths and numbers of arithmetic devices involved in the communication are closest to the communication data length between the CPU 11A and the CPU 11B and the number of arithmetic devices involved in the communication, respectively, that are the evaluation targets. The number of pieces of existing performance data to be selected may be arbitrarily determined. The existing performance data is, for example, recorded on the HDD 103 as the ideal communication processing time recording table 103A.

Each of the four pieces of existing performance data selected in S31 is a combination of three elements, namely the number of arithmetic devices involved in the communication, the communication data length, and the communication processing time. In addition, with respect to the pieces of existing performance data whose communication data lengths and numbers of arithmetic devices involved in the communication are closest, pieces of existing performance data are selected with which significant differences from existing performance data that uses $\alpha$ as a parameter become small using the following expression. The significant differences from the existing performance data indicate the magnitudes of differences between the existing performance data and the data to be evaluated defined on the basis of the numbers of arithmetic devices involved in the communication and the communication data lengths. The parameter $\alpha$ is a constant, for example, $1 \times 10^{-6}$. The constant of the parameter $\alpha$ to be selected may be arbitrarily determined.

Significant difference from existing performance data = (Number of arithmetic devices involved in communication of existing performance data - Actual number of arithmetic devices involved in communication)$^2$ + $\alpha \times$ (Communication data length of existing performance data - Actual communication data length)$^2$

In S32, the communication processing time comparison unit 101D estimates communication processing time T1 using linear interpolation based on the communication data length. In the estimation of the communication processing time T1, two of the selected four pieces of existing performance data whose numbers of arithmetic devices involved in the communication are larger are used.

In S33, the communication processing time comparison unit 101D estimates communication processing time T2 using linear interpolation based on the communication data length. In the estimation of the communication processing time T2, two of the selected four pieces of existing performance data whose numbers of arithmetic devices involved in the communication are smaller are used.

In the processes of the linear interpolation performed in S32 and S33, estimated communication processing time Tx and the corresponding number of arithmetic devices Px involved in the communication are obtained. In the processes of the linear interpolation, two sets of performance data {Pa, La, Ta} and {Pb, Lb, Tb} constituted by elements of the number of arithmetic devices P involved in the communication, a communication data length L, and communication processing time T and the following two expressions are used.

$$\text{Estimated communication processing time } Tx = Ta + (Tb - Ta) \times$$
$$(\text{Actual communication data length} - La) \div (Lb - La)$$

$$\text{Corresponding number of arithmetic devices } Px \text{ involved in}$$
$$\text{communication} = Pa + (Pb - Pa) \times (\text{Actual communication data length} - La) \div$$
$$(Lb - La)$$

In S34, the communication processing time comparison unit 101D estimates ideal communication processing time Tideal using linear interpolation of data corresponding to the number of arithmetic devices involved in the communication. In the estimation of the ideal communication processing time Tideal, the communication processing times T1 and T2 are used. The ideal communication processing time Tideal serves as the reduction target value of the communication overhead in S5 illustrated in FIG. 2.

In the process of the linear interpolation in S34, the ideal communication processing time Tideal is obtained using the following calculation. In the calculation for obtaining the ideal communication processing time Tideal, the communication processing time T1 and the communication processing time T2 obtained using the expression of the communication processing time Tx and the number of arithmetic devices P1 involved in the communication and the number of arithmetic devices P2 involved in the communication obtained using the expression of the corresponding number of arithmetic devices Px involved in the communication are used.

Ideal communication processing time Tideal = T1 + (T2 - T1) × (Actual number of arithmetic devices involved in communication - P1) ÷ (P2 - P1)

In S35, the communication processing time comparison unit 101D compares the estimated ideal communication processing time Tideal with the communication processing time corresponding to the data to be evaluated.

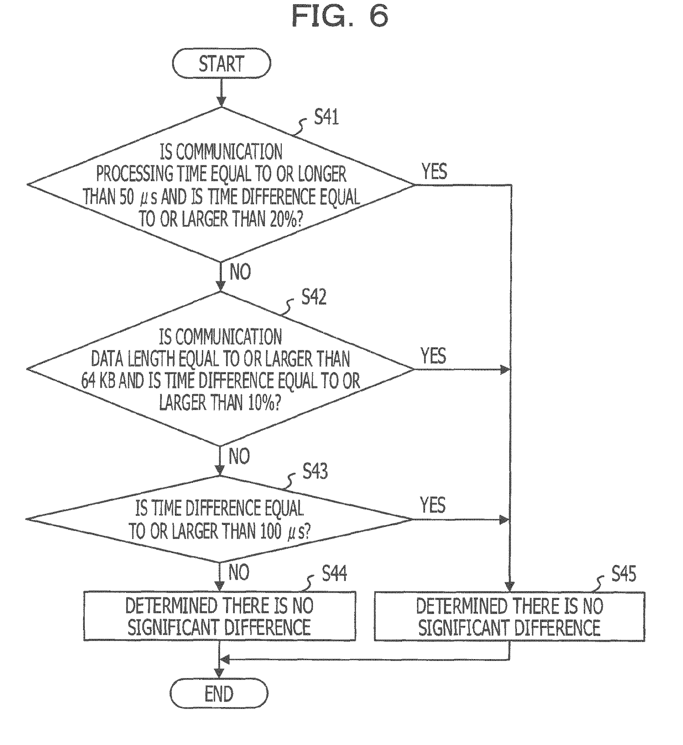

FIG. 6 is a diagram illustrating a flowchart illustrating a process performed by the network evaluation device 100 according to the embodiment. The flowchart illustrated in FIG. 6 illustrates the process for determining the significant difference in the communication processing time in S5 illustrated in FIG. 2. The process for determining the significant difference in the communication processing time is performed by the communication processing time comparison unit 101D by comparing the communication processing time and the ideal communication processing time between the CPU 11A and the CPU 11B that are the evaluation targets. MPI communication conditions and the number of arithmetic processes according to the embodiment may be arbitrarily set.

In S41, the communication processing time comparison unit 101D determines whether or not the communication processing time between the CPU 11A and the CPU 11B is equal to or longer than 50 μs and whether or not a time difference between the communication processing time and the ideal communication processing time is equal to or higher than 20%. Communication processing time of 50 μs is set as an example of the communication processing time. Communication processing time of 50 μs is set as a tentative standard for time that is taken for the CPU 11A and the CPU 11B to perform an arithmetic process other than the communication processing and that has a significant length. For example, a CPU having a clock frequency of 3 GHz performs calculation of values 600,000 to 1,200,000 times in processing time of 50 μs. If it is determined in S41 that the communication processing time between the CPU 11A and the CPU 11B is shorter than 50 μs or that the time difference in the communication processing time is lower than 20%, the communication processing time comparison unit 101D then makes a determination in S42.

If it is determined in S41 that the communication processing time is equal to or longer than 50 μs and that the time difference in the communication processing time is equal to or higher than 20%, the communication processing time comparison unit 101D then performs processing in S45.

In S42, the communication processing time comparison unit 101D determines whether or not the communication data length between the CPU 11A and the CPU 11B is equal to or larger than 64 KB and whether or not the time difference between the communication processing time and the ideal communication processing time is equal to or higher than 10%. A communication data length of 64 KB is set as an example of the communication data length. If the communication data length is, for example, 64 KB, the communication processing time between the CPU 11A and the CPU 11B is, for example, 30 μs to 40 μs. If it is determined in S42 that the communication data length between the CPU 11A and the CPU 11B is smaller than 64 KB or that the time difference between the communication processing time and the ideal communication processing time is lower than 10%, the communication processing time comparison unit 101D then makes a determination in S43.

If it is determined in S42 that the communication data length is equal to or larger than 64 KB and that the time difference between the communication processing time and the ideal communication processing time is equal to or higher than 10%, the communication processing time comparison unit 101D then makes a determination in S45.

In S43, the communication processing time comparison unit 101D determines whether or not the time difference between the communication processing time and the ideal communication processing time is equal to or larger than 100 μs. If it is determined that the time difference between the communication processing time and the ideal communication processing time is smaller than 100 μs, the communication processing time comparison unit 101D then performs processing in S44.

If it is determined in S43 that the time difference between the communication processing time and the ideal communication processing time is equal to or larger than 100 μs, the communication processing time comparison unit 101D then performs the processing in S45.

In S44, the communication processing time comparison unit 101D determines that there is no significant difference between the communication processing time and the ideal communication processing time.

In S45, the communication processing time comparison unit 101D determines that there is a significant difference between the communication processing time and the ideal communication processing time.

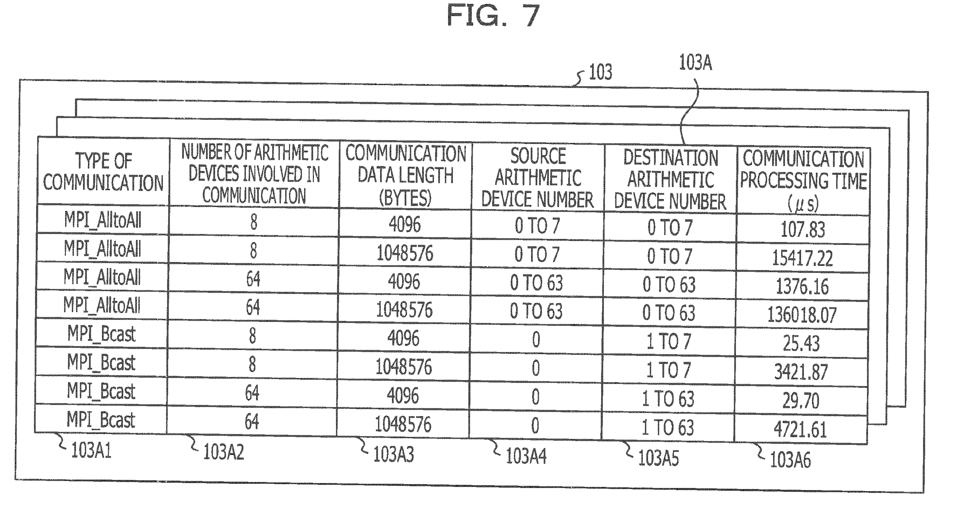

FIG. 7 is a diagram illustrating an example of the data structure of the ideal communication processing time recording table 103A according to the embodiment. The HDD 103 of the network evaluation device 100 stores the ideal communication processing time recording table 103A.

The ideal communication processing time recording table 103A is, for example, a table in which are recorded a communication data length (B) and communication processing time (μs) at a time when the CPU 11A of the arithmetic device 10A and the CPU 11B of the arithmetic device 10B have executed a parallel program described by a communication application programming interface (API) called a Message Passing Interface (MPI). In the ideal communication processing time recording table 103A, a field 103A1 indicating the type of communication, a field 103A2 indicating the number of arithmetic devices that are involved in the communication, a field 103A3 indicating the communication data length, a field 103A4 indicating the source arithmetic device number, a field 103A5 indicating the destination arithmetic device number, and a field 103A6 indicating the communication processing time are provided. Pieces of information in each field arranged in a horizontal direction are associated with one another.

In the field 103A1, the type of communication in an MPI communication function is set. In the example illustrated in FIG. 7, two types of communication, namely "MPI_AlltoAll" (all-to-all communication) and "MPI_Bcast" (broadcast communication), are set.

In the field 103A2, the number of arithmetic devices that are involved in the communication in the MPI communication function is set.

In the field 103A3, the communication data length corresponding to the type of communication and the number of arithmetic devices is set.

In the field 103A4, the source arithmetic device number is set.

In the field 103A5, the destination arithmetic device number is set.

In the field 103A6, the communication processing time corresponding to the type of communication and the number of arithmetic devices is set.

The communication processing time based on the communication data length or the number of arithmetic devices involved in the communication recorded in the ideal communication processing time recording table 103A is described hereinafter. With respect to the ideal communication processing time used for calculating the reduction target value of the communication overhead, there is a case in which the ideal communication processing time based on the communication data length of the communication processing time during the calculation process in the CPU 11A and the CPU 11B has not been measured. Similarly, there is a case in which the ideal communication processing time based on the number of arithmetic devices involved in the communication of the communication processing time during the calculation process has not been measured. In such cases, the communication processing time comparison unit 101D compares the ideal communication processing time based on a similar communication data length or a similar number of arithmetic devices involved in the communication with the communication processing time between the CPU 11A and the CPU 11B that is the evaluation target. Alternatively, the communication processing time comparison unit 101D performs additional measurement of the ideal communication processing time using the ideal communication processing time obtaining unit 101A.

When the ideal communication processing time based on a similar communication data length or a similar number of arithmetic devices involved in the communication is to be used, the ideal communication processing time based on the similar communication data length or the similar number of arithmetic devices involved in the communication is used. The ideal communication processing time that has not been measured may be obtained by interpolating or extrapolating the communication data length or the number of arithmetic devices involved in the communication to the ideal communication processing time based on a similar communication data length or a similar number of arithmetic devices. In the data interpolation of the ideal communication processing time, interpolation using the communication data length and interpolation using the number of arithmetic devices involved in the communication are desirably performed in this order. By performing the data interpolation using the communication data length and then using the number of arithmetic devices involved in the communication, accumulation of errors in data caused by multiple times of data interpolation may be suppressed.

When the network evaluation device 100 according to the embodiment is to be used, the ideal communication processing time obtaining unit 101A may obtain in advance the type of communication between arithmetic devices that are the obtaining targets, the number of arithmetic devices, and the communication processing time. The type of communication is desirably set to, for example, "MPI_Send/MPI_Recv" (one-to-one communication), "MPI_Bcast" (broadcast communication), "MPI_Scatter" (scattering communication), "MPI_Gather" (gathering communication), or "MPI_Alltoall" (transpose communication). The number of arithmetic devices is desirably set to a power of 2 or a square of an integer. The communication data length is desirably set to a power of 2 or a value obtained by adding or subtracting 1 to or from a power of 2. However, when the communication pattern and the communication data length for a parallel computer system that are targets for obtaining data are known, the communication processing time may be obtained on the basis of a known communication pattern and a known communication data length.

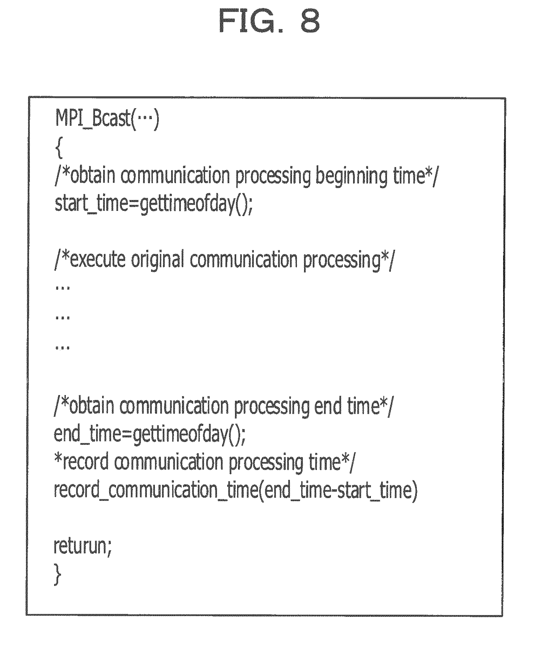

FIG. 8 illustrates an example of a method for obtaining the ideal communication processing time and the communication processing time between the CPU 11A and the CPU 11B according to the embodiment. FIG. 8 illustrates an example of a method for obtaining the communication processing time between the CPU 11A and the CPU 11B based on "MPI_Bcast". Measurement of the ideal communication processing time and the communication processing time is performed by the timer 12A included in the CPU 11A of the arithmetic device 10A and the timer 12B included in the CPU 11B of the arithmetic device 10B.

As illustrated in FIG. 8, the CPU 11A and the CPU 11B obtain the communication processing beginning times and the communication processing end times, calculate the ideal communication processing times, and record the ideal communication processing times while the calculation process is not being performed. In addition, the CPU 11A and the CPU 11B obtain the communication processing beginning times and the communication processing end times, calculate the communication processing times, and record the communication processing times while the calculation process is being performed.

The CPU 11A and the CPU 11B obtain the ideal communication processing times and the communication processing times between the CPU 11A and the CPU 11B by performing the series of the obtaining process, the calculation process, and the recording process. In addition, a part of a program used for the series of the obtaining process, the calculation process, and the recording process in the embodiment is temporarily recorded on the RAM 13A and the RAM 13B.

The CPU 11A records the ideal communication processing time and the communication processing time of the CPU 11A obtained by the series of the obtaining process, the calculation process, and the recording process on the HDD 14A. The CPU 11A transmits the ideal communication processing time recorded on the HDD 14A to the ideal communication processing time obtaining unit 101A. The CPU 11A transmits the communication processing time recorded on the HDD 14A to the communication processing time obtaining unit 101C.

The CPU 11B records the ideal communication processing time and the communication processing time of the CPU 11B obtained by the series of the obtaining process, the calculation process, and the recording process on the HDD 14B. The CPU 11B transmits the ideal communication processing time recorded on the HDD 14B to the ideal communication processing time obtaining unit 101A. The CPU 11B transmits the communication processing time recorded on the HDD 14B to the communication processing time obtaining unit 101C.

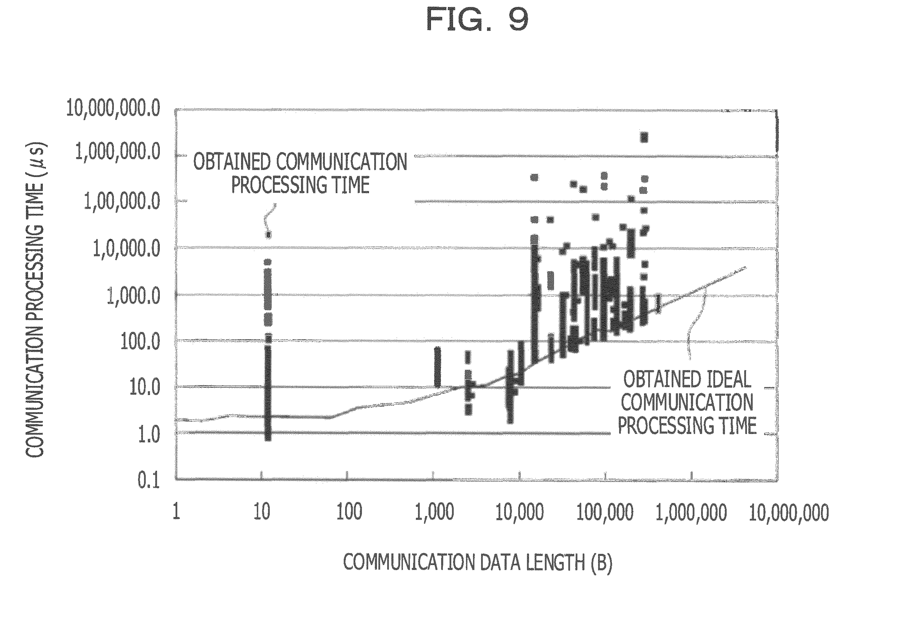

FIG. 9 is a diagram illustrating communication processing times and ideal communication processing times obtained by the network evaluation device 100 according to the embodiment. The horizontal axis illustrated in FIG. 9 represents the communication data length (B) between the arithmetic devices for which the communication processing times are to be obtained, that is, the CPU 11A and the CPU 11B. The vertical axis illustrated in FIG. 9 represents the communication processing time of one operation of communication between the arithmetic devices for which the communication processing times are to be obtained. The black rectangles illustrated in FIG. 9 represent the communication processing times between the arithmetic devices obtained by the communication processing time obtaining unit 101C. The solid line illustrated in FIG. 9 represents the ideal communication processing times between the arithmetic devices estimated by the communication processing time comparison unit 101D.

As illustrated in FIG. 9, the communication processing times may significantly vary depending on the case, as compared to the communication processing times indicated by the ideal communication processing times. Portions in which there are significant differences in the communication processing time between the communication processing times and the ideal communication processing times are portions in which the communication overhead is desired to be reduced.

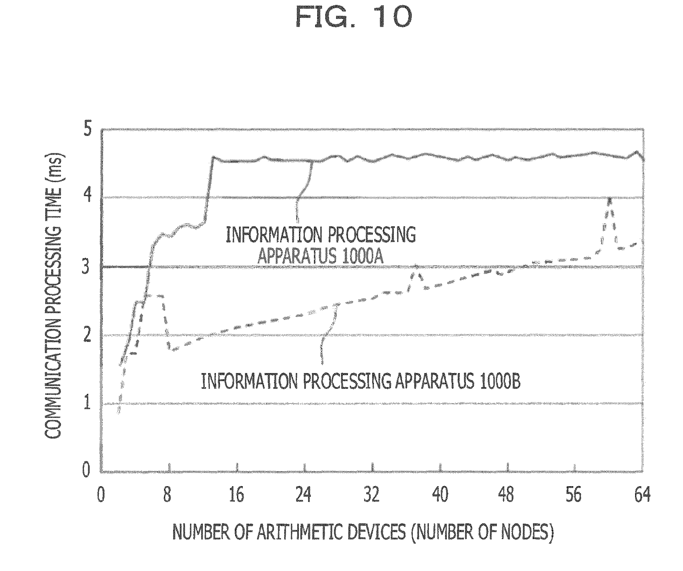

FIG. 10 is a diagram illustrating a relationship between the number of arithmetic devices (the number of nodes) involved in the communication and the communication processing time (ms) in a communication processing software library based on an MPI standard in the network evaluation device 100 according to the embodiment. The horizontal axis illustrated in FIG. 10 represents the number of arithmetic devices involved in the communication. The vertical axis illustrated in FIG. 10 represents the communication processing time between the arithmetic devices involved in the communication, that is, the CPU 11A and the CPU 11B. The solid line illustrated in FIG. 10 represents the communication processing time corresponding to the number of arithmetic devices for an information processing apparatus 1000A in broadcast communication according to the MPI standard. The broken line illustrated in FIG. 10 represents the communication processing time corresponding to the number of arithmetic devices for an information processing apparatus 1000B in the broadcast communication according to the MPI standard. A plurality of arithmetic devices are mounted on the information processing apparatus 1000A using a communication algorithm A. A plurality of arithmetic devices are mounted on the information processing apparatus 1000B using a communication algorithm B.

As illustrated in FIG. 10, in the information processing apparatus 1000A, when the number of arithmetic devices is 5, the communication processing time is about 2.5 ms. Next, when the number of arithmetic devices is 6, the communication processing time is about 3.3 ms. That is, it may be seen that when the number of arithmetic devices increases from 5 to 6, the communication processing time of the information processing apparatus 1000A sharply increases.

On the other hand, in the information processing apparatus 1000A, when the number of arithmetic devices is 12, the communication processing time is about 3.6 ms. Next, when the number of arithmetic devices is 13, the communication processing time is about 4.6 ms. That is, it may be seen that when the number of arithmetic devices increases from 12 to 13, the communication processing time of the information processing apparatus 1000A sharply increases.

In the information processing apparatus 1000B, when the number of arithmetic devices is 4, the communication processing time is about 1.7 ms. Next, when the number of arithmetic devices is 5, the communication processing time is about 2.6 ms. That is, it may be seen that when the number of arithmetic devices increases from 4 to 5, the communication processing time of the information processing apparatus 1000B sharply increases.

On the other hand, in the information processing apparatus 1000B, when the number of arithmetic devices is 7, the communication processing time is about 2.6 ms. Next, when the number of arithmetic devices is 8, the communication processing time is about 1.8 ms. That is, it may be seen that when the number of arithmetic devices increases from 7 to 8, the communication processing time of the information processing apparatus 1000B sharply decreases.

As described above, the relationship between the number of arithmetic devices and the communication processing time in the information processing apparatus 1000A and the information processing apparatus 1000B is not a simple directly proportional relationship. It may be estimated that the relationship between the number of arithmetic devices and the communication processing time is determined by a difference between the communication algorithm A adopted by the information processing apparatus 1000A and the communication algorithm B adopted by the information processing apparatus 1000B.

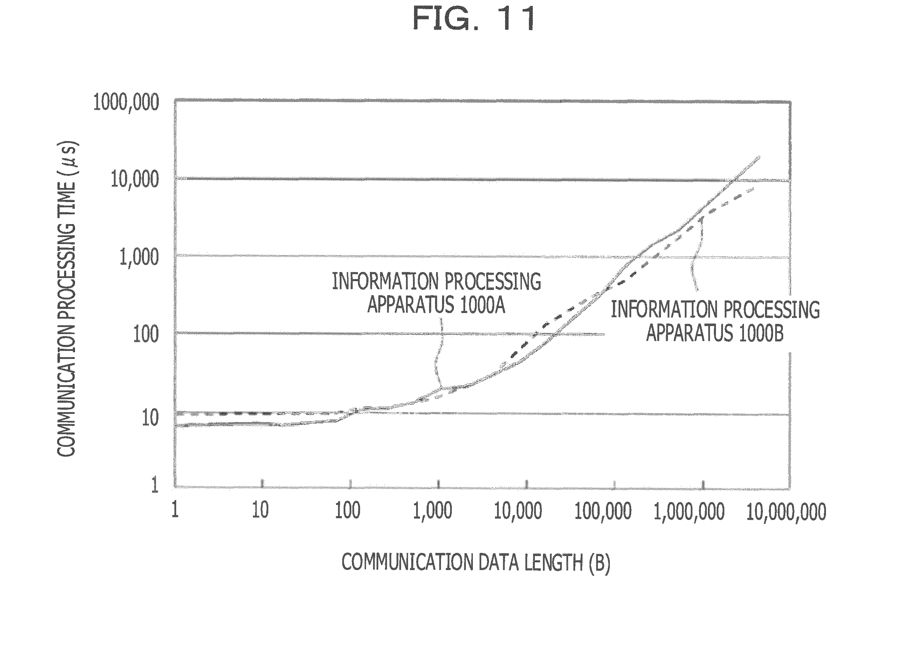

FIG. 11 is a diagram illustrating a relationship between the communication data length and the communication processing time in the communication processing software library based on the MPI standard in the network evaluation device 100 according to the embodiment. The horizontal axis illustrated in FIG. 11 represents the communication data length between the arithmetic devices involved in the communication, that is, the CPU 11A and the CPU 11B. The vertical axis represents the communication processing time between the arithmetic devices involved in the communication. The solid line illustrated in FIG. 11 represents the relationship between the communication data length and the communication processing time in the information processing apparatus 1000A in the broadcast communication according to the MPI standard. The broken line illustrated in FIG. 11 represents the relationship between the communication data length and the communication processing time in the information processing apparatus 1000B in the broadcast communication according to the MPI standard. The plurality of arithmetic devices are mounted on the information processing apparatus 1000A using the communication algorithm A. The plurality of arithmetic devices are mounted on the information processing apparatus 1000B using the communication algorithm B.

As illustrated in FIG. 11, in the information processing apparatus 1000A, when the communication data length is 4 B, the communication processing time is about 6.6 $\mu$s. When the communication data length is 8 B, the communication processing time is about 6.9 $\mu$s. When the communication data length is 16 B, the communication processing time is about 6.7 $\mu$s. That is, when the communication data length increases from 4 B to 16 B, the communication processing time of the information processing apparatus 1000A scarcely increases.

On the other hand, in the information processing apparatus 1000A, when the communication data length is 8,192 B, the communication processing time is about 43.7 $\mu$s. When the communication data length is 16,384 B, the communication processing time is about 76.4 $\mu$s. When the communication data length is 32,768 B, the communication processing time is about 152.8 $\mu$s. That is, it may be seen that when the communication data length increases from 8,192 B to 32,768 B, the communication processing time of the information processing apparatus 1000A sharply increases.

As illustrated in FIG. 11, in the information processing apparatus 1000B, when the communication data length is 4 B, the communication processing time is about 8.7 $\mu$s. When the communication data length is 8 B, the communication processing time is about 8.9 $\mu$s. When the communication data length is 16 B, the communication processing time is about 9.1 $\mu$s. That is, when the communication data length increases from 4 B to 16 B, the communication processing time of the information processing apparatus 1000B scarcely increases.

On the other hand, in the information processing apparatus 1000B, when the communication data length is 8,192 B, the communication processing time is about 54.3 $\mu$s. When the communication data length is 16,384 B, the communication processing time is about 131.3 $\mu$s. When the communication data length is 32,768 B, the communication processing time is about 229.7 $\mu$s. That is, it may be seen that when the communication data length increases from 8,192 B to 32,768 B, the communication processing time of the information processing apparatus 1000B sharply increases.

As described above, it may be seen that the relationship between the communication data length and the communication processing time in the information processing apparatus 1000A and the information processing apparatus 1000B is not a simple directly proportional relationship. It may be estimated that the relationship between the communication data length and the communication processing time is determined by a difference between the communication algorithm A adopted by the information processing apparatus 1000A and the communication algorithm B adopted by the information processing apparatus 1000B.

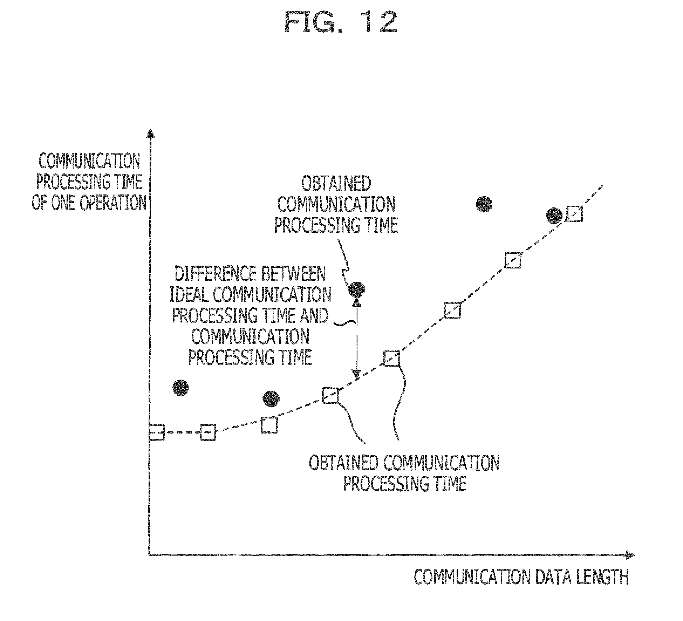

FIG. 12 is a schematic diagram illustrating an approach to calculating the reduction target value of the communication overhead from a difference between the communication overhead and the ideal communication processing time obtained by the network evaluation device 100 according to the embodiment. The horizontal axis illustrated in FIG. 12 represents the communication data length between the arithmetic devices for which the communication processing times are to be obtained, that is, the CPU 11A and the CPU 11B. The vertical axis illustrated in FIG. 12 represents the communication processing time for one operation of communication between the arithmetic devices that are targets for obtaining data. The white rectangles illustrated in FIG. 12 represent the ideal communication processing times between the arithmetic devices obtained by the ideal communication processing time obtaining unit 101A. The black circles illustrated in FIG. 12 represent the communication processing times between the arithmetic devices obtained by the communication processing time obtaining unit 101C. The broken line illustrated in FIG. 12 represents the ideal communication processing times between the arithmetic devices estimated by the communication processing time comparison unit 101D. When the communication processing time comparison unit 101D estimates the ideal communication processing times, data regarding the ideal communication processing times between the arithmetic devices may be insufficient in some cases. When the data regarding the ideal communication processing times between the arithmetic devices is insufficient, the ideal communication processing time obtaining unit 101A performs additional measurement of the ideal communication processing times. The arrow illustrated in FIG. 12 represents a difference between an ideal communication processing time and a communication processing time. Data in which the difference is large is determined by the communication processing time comparison unit 101D to be data having a significant difference.

As illustrated in FIG. 12, the communication processing time comparison unit 101D compares the difference between the ideal communication processing time and the communication processing time, and determines whether or not data in which the difference is large has a significant difference. Next, as indicated by S7 illustrated in FIG. 2, the communication processing time comparison unit 101D calculates the determined data as the reduction target value of the communication overhead, and outputs the reduction target value of the communication overhead to the monitor 17.

According to the network evaluation device 100, the method for evaluating a network, and the network evaluation program according to the embodiment, the ideal communication processing time obtaining unit 101A measures the ideal communication processing time between the CPU 11A and the CPU 11B, which are the evaluation targets, while the CPU 11A and the CPU 11B are not executing the calculation program. Subsequently, the communication processing time obtaining unit 101C measures the communication processing time between the CPU 11A and the CPU 11B while the CPU 11A and the CPU 11B are executing the calculation program. The communication processing time comparison unit 101D compares the ideal communication processing time with the communication processing time, and outputs a time difference between the ideal communication processing time and the communication processing time. Therefore, the communication overhead between the CPU 11A and the CPU 11B may be easily evaluated. Since the communication overhead between a plurality of processors may be easily evaluated, the limit of an increase in the speed of processing of the program when the number of processors used is increased may be easily grasped.

INDUSTRIAL APPLICABILITY

According to the technology disclosed herein, a first communication processing time obtaining unit obtains first communication processing time between a plurality of processors while the plurality of processors are not executing a program. Subsequently, a second communication processing time obtaining unit obtains second communication processing time between the plurality of processors while the plurality of processors are executing the program. By comparing the first communication processing time and the second communication processing time and outputting a time difference between the first communication processing time and the second communication processing time using a communication processing time comparison unit, communication overhead between the plurality of processors may be easily evaluated. Since the communication overhead between the plurality of processors may be easily evaluated, the limit of an increase in the speed of processing of the program when the number of processors used is increased may be easily grasped.

[REFERENCE SIGNS LIST]

| | |
|------|------|
| 10A | arithmetic device |
| 10B | arithmetic device |
| 11A | CPU |
| 11B | CPU |
| 12A | timer |
| 12B | timer |
| 13A | RAM |
| 13B | RAM |
| 14A | HDD |
| 14B | HDD |
| 15 | network |
| 16 | LAN |
| 17 | monitor |
| 18A | bus |
| 18B | bus |
| 100 | network evaluation device |
| 101 | CPU |
| 101A | ideal communication processing time obtaining unit |
| 101B | ideal communication processing time recording unit |
| 101C | communication processing time obtaining unit |
| 101D | communication processing time comparison unit |
| 102 | RAM |
| 102A | evaluation program |
| 103 | HDD |
| 103A | ideal communication processing time recording table |
| 103A1 | field |
| 103A2 | field |
| 103A3 | field |
| 103A4 | field |
| 103A5 | field |
| 103A6 | field |
| 104 | graphic processing device |
| 105 | communication interface |
| 106 | bus |
| 130A | calculation program |
| 130B | calculation program |
| 1000 | information processing apparatus |
| 1000A | information processing apparatus |
| 1000B | information processing apparatus |

**Claims**

1. A network evaluation device that evaluates a communication state of an information processing apparatus including a plurality of processors which communicate with one another and which execute a program, the network evaluation device comprising:

   a first communication processing time obtaining unit that obtains first communication processing time between the plurality of processors while the plurality of processors are not executing the program;
   a first communication processing time recording unit that records the first communication processing time obtained by the first communication processing time obtaining unit;
   a second communication processing time obtaining unit that obtains second communication processing time between the plurality of processors while the plurality of processors are executing the program; and
   a communication processing time comparison unit that compares the first communication processing time recorded by the first communication processing time recording unit with the second communication processing time obtained by the second communication processing time obtaining unit, and that outputs a time difference between the first communication processing time and the second communication processing time.

2. The network evaluation device according to claim 1,
   wherein the communication processing time comparison unit determines a significant difference between the first communication processing time and the second communication processing time from the time difference between the first communication processing time and the second communication processing time.

3. The network evaluation device according to claim 1,
   wherein the communication processing time comparison unit interpolates values into the first communication processing time between the plurality of processors based on a communication data length between the plurality of processors, a number of processors, and the time difference.

4. The network evaluation device according to claim 1,
   wherein the communication processing time comparison unit interpolates values into the first communication processing time between the plurality of processors based on a communication data length, and
   wherein the communication processing time comparison unit interpolates values into the first communication processing time between the plurality of processors based on a number of processors.

5. The network evaluation device according to claim 1,
   wherein, when integer parts of quotients obtained by dividing results obtained by subtracting 1 from communication data lengths by a certain integer constant are the same, the communication processing time comparison unit interpolates values into the first communication processing time between the plurality of processors based on the communication data length and a number of processors.

6. The network evaluation device according to claim 1,
   wherein, when integer parts of logarithms of results obtained by subtracting 1 from a numbers of processors, the logarithms having a certain integer constant as bases, are the same value, the communication processing time comparison unit interpolates values into the first communication processing time between the plurality of processors based on a communication data length and the number of processors.

7. A method for evaluating a network that evaluates a communication state of an information processing apparatus including a plurality of processors which communicate with one another and which execute a program, the method for evaluating a network comprising:

   obtaining first communication processing time between the plurality of processors while the plurality of processors are not executing the program;
   recording the obtained first communication processing time;
   obtaining second communication processing time between the plurality of processors while the plurality of processors are executing the program;
   comparing the recorded first communication processing time with the obtained second communication processing time; and
   outputting a time difference between the first communication processing time and the second communication processing time.

8. The method for evaluating a network according to claim 7, further comprising:

   determining a significant difference between the first communication processing time and the second communication processing time from the time difference between the first communication processing time and the second communication processing time.

9. The method for evaluating a network according to claim 7, further comprising:

   interpolating values into the first communication processing time between the plurality of processors based on a communication data length between the plurality of processors, a number of the plurality of processors, and the time difference.

10. The method for evaluating a network according to claim 7, further comprising:

    interpolating values into the first communication processing time between the plurality of processors based on a communication data length; and
    interpolating values into the first communication processing time between the plurality of processors based on a number of processors.

11. The method for evaluating a network according to claim 7, further comprising:

    interpolating, when integer parts of quotients obtained by dividing results obtained by subtracting 1 from communication data lengths by a certain integer constant are the same, values into the first communication processing time between the plurality of processors based on the communication data length and a number of processors.

12. The method for evaluating a network according to claim 7, further comprising:

    interpolating, when integer parts of logarithms of results obtained by subtracting 1 from a number of processors, the logarithms having a certain integer constant as bases, are the same value, values into the first communication processing time between the plurality of processors based on a communication data length and the number of processors.

13. A computer-readable recording medium having stored therein a network evaluation program for causing a computer to execute a process for evaluating a communication state of an information processing apparatus including a plurality of processors that communicate with one another and that execute a program, the process comprising:

    obtaining first communication processing time between the plurality of processors while the plurality of processors are not executing the program;
    recording the obtained first communication processing time;
    obtaining second communication processing time between the plurality of processors while the plurality of processors are executing the program;
    comparing the recorded first communication processing time with the obtained second communication processing time; and
    outputting a time difference between the first communication processing time and the second communication processing time.

14. The computer-readable recording medium according to claim 13, the process further comprising:

    determining a significant difference between the first communication processing time and the second communication processing time from the time difference between the first communication processing time and the second communication processing time.

15. The computer-readable recording medium according to claim 13, the process further comprising:

    interpolating values into the first communication processing time between the plurality of processors based on a communication data length between the plurality of processors, a number of processors, and the time difference.

**16.** The computer-readable recording medium according to claim 13, the process further comprising:

interpolating values into the first communication processing time between the plurality of processors based on a communication data length; and
interpolating values into the first communication processing time between the plurality of processors based on a number of processors.

**17.** The computer-readable recording medium according to claim 13, the process further comprising:

interpolating, when integer parts of quotients obtained by dividing results obtained by subtracting 1 from communication data lengths by a certain integer constant are the same, values into the first communication processing time between the plurality of processors based on the communication data length and a number of processors.

**18.** The computer-readable recording medium according to claim 13, the process further comprising:

interpolating, when integer parts of logarithms of results obtained by subtracting 1 from the numbers of processors, the logarithms having a certain integer constant as bases, are the same value, values into the first communication processing time between the plurality of processors based on a communication data length and the number of processors.

FIG. 1

# FIG. 2

```
              ┌─────────┐
              │  START  │
              └────┬────┘
                   │
                   ▼                           S1
              ╱─────────────────╲
             ╱  HAS IDEAL        ╲  NO
            ╱ COMMUNICATION       ╲────────────┐
            ╲ PROCESSING TIME     ╱            │
             ╲ BEEN RECORDED?    ╱             ▼
              ╲─────────────────╱    ┌──────────────────────────┐
                   │ YES            │ PROCESS FOR MEASURING     │  S6
                   │                │ IDEAL COMMUNICATION       │
                   │                │ PROCESSING TIME           │
                   │                └────────────┬─────────────┘
                   │◄────────────────────────────┘
                   ▼
       ┌──────────────────────────┐
       │ PROCESS FOR OBTAINING     │
       │ COMMUNICATION OH IN       │  S2
       │ CALCULATION PROCESS THAT  │
       │ IS EVALUATION TARGET      │
       └────────────┬─────────────┘
                    ▼                        S3
            ╱──────────────────╲
           ╱   PROCESS FOR      ╲ NO
          ╱  DETERMINING WHETHER ╲──────────┐
          ╲  OR NOT IDEAL ...    ╱          ▼
           ╲  OBTAINED?         ╱   ┌──────────────────────────┐
            ╲──────────────────╱    │ PROCESS FOR OBTAINING     │
                   │ YES            │ IDEAL COMMUNICATION       │  S7
                   │                │ PROCESSING TIME CORRESP.  │
                   │                └────────────┬─────────────┘
                   │◄────────────────────────────┘
                   ▼
       ┌──────────────────────────┐
       │ PROCESS FOR USING IDEAL   │  S4
       │ COMMUNICATION PROC. TIME  │
       └────────────┬─────────────┘
                    ▼
       ┌──────────────────────────┐
       │ PROCESS FOR DETERMINING   │  S5
       └────────────┬─────────────┘
                    ▼
              ┌─────────┐
              │   END   │
              └─────────┘
```

**S1:** HAS IDEAL COMMUNICATION PROCESSING TIME BEEN RECORDED? — NO → **S6** PROCESS FOR MEASURING IDEAL COMMUNICATION PROCESSING TIME

**S2:** PROCESS FOR OBTAINING COMMUNICATION OH IN CALCULATION PROCESS THAT IS EVALUATION TARGET

**S3:** PROCESS FOR DETERMINING WHETHER OR NOT IDEAL COMMUNICATION PROCESSING TIME MAY BE USED & HAS IDEAL COMMUNICATION PROCESSING TIME BEEN OBTAINED? — NO → **S7** PROCESS FOR OBTAINING IDEAL COMMUNICATION PROCESSING TIME CORRESPONDING TO COMMUNICATION PROCESSING TIME

**S4:** PROCESS FOR USING IDEAL COMMUNICATION PROCESSING TIME

**S5:** PROCESS FOR DETERMINING SIGNIFICANT DIFFERENCE IN COMMUNICATION PROCESSING TIME & CALCULATE REDUCTION TARGET VALUE OF COMMUNICATION OH

# FIG. 3

START

STOP ARITHMETIC DEVICES NOT RELATED TO OBTAINING — S11

INITIALIZE ARITHMETIC DEVICES RELATED TO OBTAINING — S12

BEGIN TO MEASURE OBTAINING TARGETS (TEMPORARY MEASUREMENT) — S13

S14 HAS TEMPORARY MEASUREMENT BEEN PERFORMED CERTAIN NUMBER OF TIMES? — NO

YES

BEGIN TO MEASURE IDEAL COMMUNICATION PROCESSING TIMES (MAIN MEASUREMENT) — S15

S16 HAS MEASUREMENT BEEN PERFORMED NUMBER OF TIMES MAIN MEASUREMENT IS TO BE PERFORMED? — NO

YES

CALCULATE MAXIMUM VALUE OF IDEAL COMMUNICATION PROCESSING TIME MEASURED IN MAIN MEASUREMENT — S17

END

# FIG. 4

```
                    ( START )
                        │
                        ▼
                  ╱──────────╲          S21
                 ╱  IS COMMUNICATION  ╲
                ╱  DATA LENGTH OF IDEAL COMMUNICATION  ╲
               ╱  PROCESSING TIME EQUAL TO ORE LARGER THAN 1 MB AND  ╲ ──── YES ───┐
               ╲  ARE NUMBERS OF ARITHMETIC DEVICES INVOLVED  ╱             │
                ╲  IN COMMUNICATION SAME?  ╱                                │
                 ╲──────────╱                                              │
                      │ NO                                                 │
                      ▼                                                    │
                  ╱──────────╲          S22                                │
                 ╱  ARE INTEGER PARTS OF  ╲                                │
                ╱  QUOTIENTS OBTAINED BY DIVIDING  ╲                       │
               ╱  "COMMUNICATION DATA LENGTHS - 1" OF  ╲                    │
              ╱ COMMUNICATION DATA LENGTHS OF IDEAL COMMUNICATION ╲─ YES ──┤
              ╲ PROCESSING TIME BY 4 KB SAME AND ARE NUMBERS OF  ╱         │
               ╲  ARITHMETIC DEVICES INVOLVED IN  ╱                        │
                ╲  COMMUNICATION SAME?  ╱                                  │
                 ╲──────────╱                                              │
                      │ NO                                                 │
                      ▼                                                    │
                  ╱──────────╲          S23                                │
                 ╱  ARE COMMUNICATION  ╲                                   │
                ╱  DATA LENGTHS SAME AND ARE INTEGER PARTS  ╲              │
               ╱  OF LOGARITHMS OF "NUMBERS OF ARITHMETIC DEVICES  ╲─ YES ─┤
               ╲  INVOLVED IN COMMUNICATION - 1" WHOSE  ╱                  │
                ╲  BASES ARE 2 SAME?  ╱                                    │
                 ╲──────────╱                                              │
                      │ NO         S24                            S25      │
                      ▼                                            ▼       ▼
         ┌──────────────────────────┐          ┌──────────────────────────┐
         │  DETERMINED TO BE USABLE │          │ DETERMINED TO BE UNUSABLE │
         └──────────────────────────┘          └──────────────────────────┘
                      │                                    │
                      ▼◄───────────────────────────────────┘
                  ( END )
```

# FIG. 5

START

SELECT EXISTING PERFORMANCE DATA — S31

ESTIMATE COMMUNICATION PROCESSING TIME
T1 USING LINEAR INTERPOLATION — S32

ESTIMATE COMMUNICATION PROCESSING TIME
T2 USING LINEAR INTERPOLATION — S33

ESTIMATE IDEAL COMMUNICATION PROCESSING
TIME Tideal USING LINEAR INTERPOLATION — S34

COMPARE IDEAL COMMUNICATION PROCESSING
TIME Tideal WITH ACTUAL COMMUNICATION
PROCESSING TIME — S35

END

# FIG. 6

START

S41

IS COMMUNICATION PROCESSING TIME EQUAL TO OR LONGER THAN 50 $\mu$s AND IS TIME DIFFERENCE EQUAL TO OR LARGER THAN 20%?

YES

NO

S42

IS COMMUNICATION DATA LENGTH EQUAL TO OR LARGER THAN 64 KB AND IS TIME DIFFERENCE EQUAL TO OR LARGER THAN 10%?

YES

NO

S43

IS TIME DIFFERENCE EQUAL TO OR LARGER THAN 100 $\mu$s?

YES

NO

S44

DETERMINED THERE IS NO SIGNIFICANT DIFFERENCE

S45

DETERMINED THERE IS NO SIGNIFICANT DIFFERENCE

END

## FIG. 7

EP 2 610 758 A1

| TYPE OF COMMUNICATION | NUMBER OF ARITHMETIC DEVICES INVOLVED IN COMMUNICATION | COMMUNICATION DATA LENGTH (BYTES) | SOURCE ARITHMETIC DEVICE NUMBER | DESTINATION ARITHMETIC DEVICE NUMBER | COMMUNICATION PROCESSING TIME ($\mu$s) |
|---|---|---|---|---|---|
| MPI_AlltoAll | 8 | 4096 | 0 TO 7 | 0 TO 7 | 107.83 |
| MPI_AlltoAll | 8 | 1048576 | 0 TO 7 | 0 TO 7 | 15417.22 |
| MPI_AlltoAll | 64 | 4096 | 0 TO 63 | 0 TO 63 | 1376.16 |
| MPI_AlltoAll | 64 | 1048576 | 0 TO 63 | 0 TO 63 | 136018.07 |
| MPI_Bcast | 8 | 4096 | 0 | 1 TO 7 | 25.43 |
| MPI_Bcast | 8 | 1048576 | 0 | 1 TO 7 | 3421.87 |
| MPI_Bcast | 64 | 4096 | 0 | 1 TO 63 | 29.70 |
| MPI_Bcast | 64 | 1048576 | 0 | 1 TO 63 | 4721.61 |

103  103A  103A1  103A2  103A3  103A4  103A5  103A6

# FIG. 8

```
MPI_Bcast(…)
{
/*obtain communication processing beginning time*/
start_time=gettimeofday();

/*execute original communication processing*/
…

…

…


/*obtain communication processing end time*/
end_time=gettimeofday();
*record communication processing time*/
record_communication_time(end_time-start_time)

returun;
}
```

# FIG. 9

EP 2 610 758 A1

# FIG. 10

# FIG. 11

EP 2 610 758 A1

# FIG. 12

COMMUNICATION
PROCESSING TIME
OF ONE OPERATION

OBTAINED
COMMUNICATION
PROCESSING TIME

DIFFERENCE BETWEEN
IDEAL COMMUNICATION
PROCESSING TIME AND
COMMUNICATION
PROCESSING TIME

OBTAINED COMMUNICATION
PROCESSING TIME

COMMUNICATION DATA LENGTH

## INTERNATIONAL SEARCH REPORT

| International application No. |
| --- |
| PCT/JP2010/005232 |

A.  CLASSIFICATION OF SUBJECT MATTER
*G06F15/17*(2006.01)i, *G06F11/30*(2006.01)i, *G06F11/34*(2006.01)i

According to International Patent Classification (IPC) or to both national classification and IPC

B.  FIELDS SEARCHED

Minimum documentation searched (classification system followed by classification symbols)
G06F15/17, G06F11/30, G06F11/34

Documentation searched other than minimum documentation to the extent that such documents are included in the fields searched
Jitsuyo Shinan Koho        1922-1996   Jitsuyo Shinan Toroku Koho    1996-2010
Kokai Jitsuyo Shinan Koho   1971-2010   Toroku Jitsuyo Shinan Koho    1994-2010

Electronic data base consulted during the international search (name of data base and, where practicable, search terms used)

C.  DOCUMENTS CONSIDERED TO BE RELEVANT

| Category* | Citation of document, with indication, where appropriate, of the relevant passages | Relevant to claim No. |
| --- | --- | --- |
| A | JP 2000-020501 A  (Toshiba Corp.),<br>21 January 2000 (21.01.2000),<br>entire text; all drawings<br>(Family: none) | 1-18 |
| A | JP 10-063550 A  (Fujitsu Ltd.),<br>06 March 1998 (06.03.1998),<br>entire text; all drawings<br>& US 5903730 A | 1-18 |
| A | JP 08-249294 A  (Hitachi, Ltd.),<br>27 September 1996 (27.09.1996),<br>entire text; all drawings<br>(Family: none) | 1-18 |

☐  Further documents are listed in the continuation of Box C.      ☐  See patent family annex.

| | |
| --- | --- |
| *     Special categories of cited documents:<br>"A"    document defining the general state of the art which is not considered<br>       to be of particular relevance<br>"E"    earlier application or patent but published on or after the international<br>       filing date<br>"L"    document which may throw doubts on priority claim(s) or which is<br>       cited to establish the publication date of another citation or other<br>       special reason (as specified)<br>"O"    document referring to an oral disclosure, use, exhibition or other means<br>"P"    document published prior to the international filing date but later than<br>       the priority date claimed | "T"    later document published after the international filing date or priority<br>       date and not in conflict with the application but cited to understand<br>       the principle or theory underlying the invention<br>"X"    document of particular relevance; the claimed invention cannot be<br>       considered novel or cannot be considered to involve an inventive<br>       step when the document is taken alone<br>"Y"    document of particular relevance; the claimed invention cannot be<br>       considered to involve an inventive step when the document is<br>       combined with one or more other such documents, such combination<br>       being obvious to a person skilled in the art<br>"&"    document member of the same patent family |

| Date of the actual completion of the international search | Date of mailing of the international search report |
| --- | --- |
| 08 November, 2010 (08.11.10) | 16 November, 2010 (16.11.10) |

| Name and mailing address of the ISA/ | Authorized officer |
| --- | --- |
| Japanese Patent Office | |
| Facsimile No. | Telephone No. |

Form PCT/ISA/210 (second sheet) (July 2009)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 10098468 A
- JP 5250339 A
- JP 2004013567 A